# EUROPÄISCHE PATENTANMELDUNG

(11) **EP 4 840 934 A1**
(43) Veröffentlichungstag der Anmeldung: **18.11.2026**
(21) Anmeldenummer: 26174966.7
(22) Anmeldetag: 28.04.2026
(51) Int. Cl.: C12C 7/22, C12C 7/00

(54) **ANLAGE ZUM BIERBRAUEN MIT EINEM ERWEITERTEN ENERGIESPEICHERTANK**

(30) Priorität: 12.05.2025 DE 102025118098
(71) Anmelder: Steinecker GmbH, 85356 Freising-Attaching (DE)
(72) Erfinder: Friedrich, Michael, 85356 Freising-Attaching (DE); Kammerloher, Helmut, 85356 Freising-Attaching (DE)
(74) Vertreter: Grünecker Patent- und Rechtsanwälte PartG mbB

(57) **Zusammenfassung**

Die vorliegende Erfindung betrifft eine Anlage zum Bierbrauen, die umfasst: einen Energiespeichertank mit einem ersten Fassungsvermögen zum Speichern rekuperativ gewonnener thermischer Energie mittels eines Wärmeträgers, einen mit dem Energiespeichertank verbundenen Erweiterungsspeichertank, mit einem zweiten Fassungsvermögen, das kleiner als das erste Fassungsvermögen ist, eine Vorrichtung, die zum rekuperativen Gewinnen thermischer Energie ausgebildet ist und mit dem Energiespeichertank und dem Erweiterungsspeichertank verbunden ist, und einen Wärmeverbraucher, der mit dem Energiespeichertank und dem Erweiterungsspeichertank verbunden ist.

## Beschreibung

### Gebiet der Erfindung

Die vorliegende Erfindung betrifft das technische Gebiet des Bierbrauens insbesondere des Bierbrauens mithilfe eines Energiespeichertanks.

### Stand der Technik

Bei der Herstellung von Bier ist ein wesentlicher Kostenfaktor der Energieverbrauch verschiedener Aufheiz- und Abkühlvorgänge. Insbesondere ist das Bereitstellen der benötigten Spitzenlast, also der kurzzeitigen maximalen Nachfrage eines Verbrauchers an thermischer Energie, sehr kostenintensiv. Im Stand der Technik sind verschiedene Ansätze zur Energierückgewinnung bekannt, in denen rekuperativ gewonnene thermische Energie mittels eines Wärmeträgers in einem Energiespeichertank bis zu ihrer Verwendung durch einen Wärmeverbraucher zwischengespeichert wird. So kann ein Energiespeichertank für eine Wärmeschaukel zwischen einem Pfannendunstkondensator, einem Läuterwürzeerhitzer und dem Energiespeichertank beziehungsweise zwischen einem Würzekühler, einem Maischgefäß und dem Energiespeichertank Verwendung finden.

Allerdings sind die in bestehenden Brauereien vorhandenen Energiespeichertanks für die Einführung immer neuer rekuperativer Technologien oder die Umstellung von Verbrauchern auf Niedertemperaturbetrieb oftmals zu klein dimensioniert, d.h. das Volumen des Speichers ist zu klein, um die bereitgestellte und von einem oder mehreren Wärmeverbrauchern benötigte Energiemenge vollständig aufnehmen und zwischenspeichern zu können.

Angesichts des beschriebenen Stands der Technik liegt der vorliegenden Erfindung die Aufgabe zugrunde, Techniken für die Herstellung von Bier mit einem verbesserten Energiemanagement in einer Brauerei, insbesondere im Sudhaus, bereitzustellen.

### Beschreibung der Erfindung

Die oben genannte Aufgabe wird durch Bereitstellen einer Anlage zum Bierbrauen gelöst, die umfasst:
einen Energiespeichertank mit einem ersten Fassungsvermögen zum Speichern rekuperativ gewonnener thermischer Energie mittels eines Wärmeträgers;
einen mit dem Energiespeichertank (in Reihe) verbundenen Erweiterungsspeichertank, mit einem zweiten Fassungsvermögen, das kleiner als das erste Fassungsvermögen (beispielsweise 10 % bis 80 % oder beispielsweise zwischen 20 % bis 60 % des ersten Fassungsvermögens) desselben ist;
eine Vorrichtung, die zum rekuperativen Gewinnen thermischer Energie ausgebildet ist und mit dem Energiespeichertank und dem Erweiterungsspeichertank verbunden ist; und
einen Wärmeverbraucher, der mit dem Energiespeichertank und dem Erweiterungsspeichertank verbunden ist.

Im Allgemeinen können hier und im Weiteren Verbindungen zwischen dem Energiespeichertank und einer oder mehreren Vorrichtungen, die zum rekuperativen Gewinnen thermischer Energie ausgebildet sind, und einem oder mehreren Wärmeverbrauchern, wie es jeweils als geeignet angesehen wird, direkt oder über den Erweiterungsspeichertank ausgebildet sein. Die rekuperativ gewonnene thermische Energie kann in dem Energiespeichertank mittels eines Wärmeträgers (beispielsweise Wasser oder Thermoöl) bis zu ihrer Verwendung im Wärmeverbraucher zwischengespeichert werden. Insbesondere kann der Energiespeichertank ein Schichtenspeichertank sein, in dem auf unterschiedlichen Niveaus Wärmeträger unterschiedlicher Temperaturen gespeichert wird. Der Energiespeichertank kann beispielsweise in verschiedenen Teilbereichen Wärmeträger/Wärme mit Temperaturniveaus zwischen 75 °C und 98 °C oder 75 °C und 110 °C speichern. Auch kann der Energiespeichertank dazu ausgebildet sein, einen Wärmeträger mit höherer Temperatur, beispielsweise zwischen 115 °C und 120 °C oder zwischen 120 °C und 145 °C, zu speichern. Die Einlagerung und Auslagerung des Wärmeträgers kann temperaturabhängig mittels einer oder mehrerer horizontaler oder vertikaler (Schicht-)Ladelanzen erfolgen. Der Energiespeichertank kann Regelklappen, Temperatursonden, zusätzliche Leitungen und Steuerungen zur temperaturabhängigen Ein- und Auslagerung des Wärmeträgers beziehungsweise dessen Schichtung aufweisen. Der Energiespeichertank kann atmosphärisch offen oder geschlossen sein.

Der Erweiterungsspeichertank kann ebenfalls der Speicherung rekuperativ gewonnener Energie und/oder der Speicherung von Hochtemperatur-Energie beispielsweise in Form von Heißwasser von mindestens 110 °C dienen, die aus Primärenergiequellen (Öl, Gas), Biogas, Fernwärme, Solarthermie, Wärmepumpe, Blockheizkraftwerk, oder der Umwandlung von elektrischer in thermische Energie, o.ä. stammen kann. Der Erweiterungsspeichertank ist atmosphärisch geschlossen und kann ebenfalls als Schichtenspeichertank ausgebildet sein. Der Erweiterungsspeichertank kann Regelklappen, Temperatursonden, zusätzliche Leitungen und Steuerungen zur temperaturabhängigen Ein- und Auslagerung des Wärmeträgers beziehungsweise dessen Schichtung aufweisen.

Im Gegensatz zum Stand der Technik wird nicht nur ein Energiespeichertank, sondern ein um den Erweiterungsspeichertank erweiterter Energiespeichertank zur Speicherung thermischer Energie in einer Anlage zum Bierbrauen, beispielsweise im Sudhaus, bereitgestellt. Die damit einhergehende Erweiterung des verfügbaren Volumens des gespeicherten Wärmeträgers erlaubt eine flexible und auch in Zeiten hohen Energieaufkommens vollständige Zwischenspeicherung der bereitgestellten thermischen Energie in dem aus dem Energiespeichertank und dem Erweiterungsspeichertank bestehenden Energiespeichersystem. Diese Art der Vergrößerung eines Energiespeichervolumens stellt somit vor allem eine kostengünstige und einfache Möglichkeit für die Nachrüstung und Erweiterung eines bestehenden Energiespeichersystems dar.

In einer Ausführungsform ist der Erweiterungsspeichertank lediglich mit einem oberen (wärmeren) Bereich des Energiespeichertanks (beispielsweise im obersten Viertel, Fünftel oder Sechstel des Energiespeichertanks) über eine Verbindungsleitung verbunden. In dieser Ausführungsform kann der Erweiterungsspeichertank direkt mit dem Wärmeverbraucher zum Liefern des Wärmeträgers an den Wärmeverbraucher verbunden sein. Nach Abkühlung in dem Wärmeverbraucher kann der Wärmeträger wieder dem Energiespeichertank oder dem Erweiterungsspeichertank zugeführt werden. Weiterhin kann in dieser Ausführungsform der Energiespeichertank direkt mit der Vorrichtung, die zum rekuperativen Gewinnen thermischer Energie ausgebildet ist, zum Liefern des Wärmeträgers an diese Vorrichtung verbunden sein. Der in der Vorrichtung, die zum rekuperativen Gewinnen thermischer Energie ausgebildet ist, erwärmte Wärmeträger kann anschließend in dem Energiespeichertank oder dem Erweiterungsspeichertank zwischengespeichert werden.

In einer alternativen Ausführungsform ist der Erweiterungsspeichertank lediglich mit einem unteren (kälteren) Bereich des Energiespeichertanks (beispielsweise im untersten Viertel, Fünftel oder Sechstel des Energiespeichertanks) über eine Verbindungsleitung verbunden. In dieser alternativen Ausführungsform kann der Energiespeichertank direkt mit dem Wärmeverbraucher zum Liefern des Wärmeträgers an den Wärmeverbraucher verbunden sein. Nach Abkühlung in dem Wärmeverbraucher kann der Wärmeträger wieder dem Energiespeichertank oder dem Erweiterungsspeichertank zugeführt werden. Weiterhin kann in dieser alternativen Ausführungsform der Erweiterungsspeichertank direkt mit der Vorrichtung, die zum rekuperativen Gewinnen thermischer Energie ausgebildet ist, zum Liefern des Wärmeträgers an diese Vorrichtung verbunden sein. Der in der Vorrichtung, die zum rekuperativen Gewinnen thermischer Energie ausgebildet ist, erwärmte Wärmeträger kann in dem Energiespeichertank oder dem Erweiterungsspeichertank zwischengespeichert werden.

In den beiden alternativen Ausführungsformen kann über die Verbindungsleitung jeweils Wärmeträger von einem der Tanks zu dem anderen geliefert werden. Hierbei kann insbesondere vorgesehen sein, dass der Erweiterungsspeichertank im Betrieb durchgehend vollständig mit Wärmeträger gefüllt ist.

In den oben beschriebenen Beispielen kann die Vorrichtung, die zum rekuperativen Gewinnen thermischer Energie ausgebildet ist, ein Würzekühler oder ein Pfannendunstkondensator sein, und der Wärmeverbraucher kann ein Maischgefäß oder ein Läuterwürzeerhitzer sein. Insbesondere kann die Vorrichtung, die zum rekuperativen Gewinnen thermischer Energie ausgebildet ist, ein Würzekühler sein, und der Wärmeverbraucher kann ein Maischgefäß sein, und die Anlage kann weiterhin einen Pfannendunstkondensator als eine weitere Vorrichtung, die zum rekuperativen Gewinnen thermischer Energie ausgebildet ist, der mit dem Energiespeichertank verbunden ist, und einen Läuterwürzeerhitzer als einen weiteren Wärmeverbraucher, der mit dem Energiespeichertank verbunden ist, umfassen. Die hier aufgeführten Wärmeverbraucher und Vorrichtungen zur rekuperativen Gewinnung thermischer Energie sind lediglich als beispielhaft anzusehen.

Die Anlage kann auch andere Wärmequellen, wie Dampf- oder Hochdruckheißwasserkessel, Blockheizkraftwerke, Fernwärme, Biomasseverbrennungsanlagen, Solarthermie, Geothermie oder auch andere rekuperative Quellen thermischer Energie umfassen. Auch die Umwandlung von elektrischer in thermische Energie kann als Wärmequelle dienen.

Eine solche Wärmequelle kann gemäß einer Weiterbildung als Heizeinrichtung (beispielsweise einem Nachheizer) von der Anlage derart umfasst sein, dass die Heizeinrichtung dazu ausgebildet ist, einen in den Energiespeichertank zu speichernden Wärmeträger und/oder einen von dem Energiespeichertank gelieferten Wärmeträger und/oder einen in dem Energiespeichertank gespeicherten Wärmeträger und/oder einen in den Erweiterungsspeichertank zu speichernden Wärmeträger und/oder einen von dem Erweiterungsspeichertank gelieferten Wärmeträger und/oder einen in dem Erweiterungsspeichertank gespeicherten Wärmeträger zu erhitzen.

Für eine effiziente, rentable Nutzung der Wärmeschaukel zwischen dem Pfannendunstkondensator, dem Läuterwürzeerhitzer und dem Energiespeichertank/Erweiterungsspeichertank beziehungsweise zwischen dem Würzekühler, dem Maischgefäß und dem Energiespeichertank/Erweiterungsspeichertank kann es vorteilhaft sein, dass der Energiespeichertank zusammen mit dem Erweiterungsspeichertank sämtliche Wärmeverbraucher des Sudhauses abgesehen vom Würzekocher zumindest zu 80 % oder 90 %, insbesondere zu 100 %, mit einem Wärmeträger (beispielsweise Heißwasser) mit einer Temperatur von zumindest 75 °C, insbesondere mindestens 78 °C oder 96 °C bis 98 °C, versorgt. Es kann vorteilhaft sein, dass der Energiespeichertank/Erweiterungsspeichertank auch andere (möglichst viele) Wärmeverbraucher der Brauerei außerhalb des Sudhauses mit einem Wärmeträger (beispielsweise Heißwasser) für Heizzwecke versorgt. Bei Verwendung eines Druckspeichers (beispielsweise, wenn Temperaturen des Wärmeträgers benötigt werden, die über der vor Ort herrschenden Verdampfungstemperatur liegen) und Temperaturen von beispielsweise 105°C bis 115°C, beispielsweise 115 °C bis 120 °C oder höheren Temperaturen, kann prinzipiell auch ein Würzekocher/Würzeheißhalter über den Energiespeichertank oder den Erweiterungsspeichertank versorgt werden. Gleiches gilt für sogenannte Koch- bzw. Rohfruchtmaischen, die auf Temperaturen beispielsweise über 78°C, 85°C oder 95°C erwärmt werden.

Insbesondere kann der Energiespeichertank zusammen mit dem Erweiterungsspeichertank also als einziger Lieferant von einem Wärmeträger zur Versorgung mit Wärme im Sudhaus dienen, und so kann eine große Menge rekuperativ gewonnener Energie in dem Energiespeichertank/Erweiterungsspeichertank zwischengespeichert werden, um die Wärmeverbraucher mit einem Wärmeträger (beispielsweise Heißwasser) gegebenenfalls vollständig zu beliefern. Insbesondere erlaubt die durch den Energiespeichertank bereitgestellte Volumenerweiterung des gespeicherten Wärmeträgers auch die Zwischenspeicherung der gesamten über einen Würzekühler und einem Pfannendunstkondensator rekuperativ gewinnbaren thermischen Energie.

Weiterhin wird die Verwendung der Anlage gemäß einem der oben beschriebenen Beispiele zur Herstellung von Bier bereitgestellt, wobei bei dieser Verwendung der Erweiterungsspeichertank im Betrieb durchgehend vollständig mit Wärmeträger gefüllt sein kann.

Da bestehende Anlagen zum Bierbrauen oftmals Energiespeichertanks zu geringer Kapazität zur Aufnahme der im Verlauf des technischen Fortschritts stetig steigenden rekuperativ bereitgestellten thermischen Energie aufweisen, wird zur Lösung der oben genannten Aufgabe auch ein Verfahren zum Nachrüsten einer Anlage zum Bierbrauen, die einen Energiespeichertank zum Speichern rekuperativ gewonnener thermischer Energie, eine Vorrichtung, die zum rekuperativen Gewinnen thermischer Energie ausgebildet ist (beispielsweise ein Würzekühler oder ein Pfannendunstkondensator), und einen Wärmeverbraucher (beispielsweise ein Maischgefäß oder ein Läuterwürzeerhitzer) umfasst, bereitgestellt. Das Verfahren umfasst hierbei die Schritte des Bereitstellens eines Erweiterungsspeichertanks mit einem Fassungsvermögen, das kleiner als das Fassungsvermögen des Energiespeichertanks (beispielsweise 10 % bis 80 % oder beispielsweise zwischen 20 % bis 60 % des Fassungsvermögens des Energiespeichertanks) ist, und Verbindens des bereitgestellten Erweiterungsspeichertanks mit lediglich einem oberen Bereich oder lediglich einen unteren Bereich des Energiespeichertanks, beispielsweise im obersten beziehungsweise untersten Viertel, Fünftel oder Sechstel des Energiespeichertanks, (in Reihe).

Der Energiespeichertank der bestehenden nachzurüstenden Anlage kann ein Schichtenspeichertank sein, in dem auf unterschiedlichen Niveaus Wärmeträger unterschiedlicher Temperaturen gespeichert wird. Der Energiespeichertank kann atmosphärisch offen oder geschlossen sein. Der Energiespeichertank kann beispielsweise in verschiedenen Teilbereichen Wärmeträger/Wärme mit Temperaturniveaus zwischen 75 °C und 98 °C oder 75 °C und 110 °C oder mehr als 110°C speichern. Der im Rahmen des Verfahrens bereitgestellte Erweiterungsspeichertank kann ebenfalls der Speicherung rekuperativ gewonnener Energie und/oder der Speicherung von Hochtemperatur-Energie mittels eines Wärmeträgers, insbesondere in Form von Heißwasser, von mindestens 110 °C dienen, die aus Primärenergiequellen (Öl, Gas), Biogas, Fernwärme, Solarthermie, Wärmepumpe, Blockheizkraftwerk, oder der Umwandlung von elektrischer in thermische Energie, o.ä. stammen kann. Der Erweiterungsspeichertank selbst ist atmosphärisch geschlossen, kann aber mit einem atmosphärisch offenen Energiespeicher verbunden sein.

Gemäß einer Ausführungsform umfasst das Verfahren das Verbinden des Erweiterungsspeichertanks, insbesondere direkt, mit dem Wärmeverbraucher zum Liefern von einem in dem Erweiterungsspeichertank gespeicherten Wärmeträger an den Wärmeverbraucher, wenn der Erweiterungsspeichertank lediglich mit dem oberen Bereich des Energiespeichertanks verbunden ist, und das Verbinden des Erweiterungsspeichertanks, insbesondere direkt, mit der Vorrichtung, die zum rekuperativen Gewinnen thermischer Energie ausgebildet ist, zum Liefern von einem in dem Erweiterungsspeichertank gespeicherten Wärmeträger an diese Vorrichtung, wenn der Erweiterungsspeichertank lediglich mit dem unteren Bereich des Energiespeichertanks verbunden ist.

Das Nachrüstverfahren kann allgemein so ausgeführt werden, dass eine Anlage gemäß einem der oben beschriebenen Beispiele erhalten wird.

Die oben genannte Aufgabe wird zudem durch Bereitstellen eines Verfahrens zum Bierbrauen mit den Schritten gelöst:
Bereitstellen eines Energiespeichertanks mit einem ersten Fassungsvermögen zum Speichern rekuperativ gewonnener thermischer Energie mittels eines Wärmeträgers;
Bereitstellen eines mit dem Energiespeichertank verbundenen Erweiterungsspeichertank, mit einem zweiten Fassungsvermögen, das kleiner als das erste Fassungsvermögen (beispielsweise 10 % bis 80 % oder beispielsweise zwischen 20 % bis 60 % des ersten Fassungsvermögens) ist, zum Speichern rekuperativ gewonnener thermischer Energie in einem Wärmeträger und/oder nicht rekuperativ gewonnener thermischer Hochtemperatur-Energie (bei einer Temperatur von mindestens 110 °C des Wärmeträgers);
Leiten von einem Wärmeträger aus dem Energiespeichertank zu einer Vorrichtung, die zum rekuperativen Gewinnen thermischer Energie ausgebildet ist; und
Leiten von einem Wärmeträger aus dem Erweiterungsspeichertank zu einem Wärmeverbraucher.

Die oben genannte Aufgabe wird zudem durch Bereitstellen eines Verfahrens zum Bierbrauen mit den Schritten gelöst:
Bereitstellen eines Energiespeichertanks mit einem ersten Fassungsvermögen zum Speichern rekuperativ gewonnener thermischer Energie mittels eines Wärmeträgers;
Bereitstellen eines mit dem Energiespeichertank verbundenen Erweiterungsspeichertank, mit einem zweiten Fassungsvermögen, das kleiner als das erste Fassungsvermögen (beispielsweise 10 % bis 80 % oder beispielsweise zwischen 20 % bis 60 % des ersten Fassungsvermögens) ist, zum Speichern rekuperativ gewonnener thermischer Energie mittels eines Wärmeträgers;
Leiten von einem Wärmeträger aus dem Erweiterungsspeichertank zu einer Vorrichtung, die zum rekuperativen Gewinnen thermischer Energie ausgebildet ist; und
Leiten von einem Wärmeträger aus dem Energiespeichertank zu einem Wärmeverbraucher.

Beide Verfahren können mithilfe eines der oben beschriebenen geeigneten Beispiele der erfindungsgemäßen Anlage ausgeführt werden, und in jedem der oben beschriebenen Beispiele der erfindungsgemäßen Anlage können die Verfahren geeignet implementiert sein.

In sämtlichen oben beschriebenen Beispielen kann der Wärmeträger in einem geschlossenen Kreislauf in dem System geführt werden. Alternativ kann an geeigneter Stelle des Systems Wärmeträger entnommen und entsprechend an einer anderen geeigneten Stelle dem System neuer Wärmeträger zugeführt werden. Ist der Wärmeträger beispielsweise Wasser, kann dieses zuerst als Wärmeträger und im Anschluss als Produktwasser (beispielhaft als Einmaischwasser oder für Reinigungsprozesse) verwendet werden. Der aus dem System als Produktwasser entnommener Wärmeträger Wasser wird dann durch frisch in das System einzubringendes Wasser ersetzt.

Im Folgenden werden Ausführungsformen einer erfindungsgemäßen Anlage zur Herstellung von Bier und eines erfindungsgemäßen Verfahrens zur Herstellung von Bier unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.
Figur 1 veranschaulicht eine Anlage zum Bierbrauen gemäß einer Ausführungsform der vorliegenden Erfindung mithilfe derer ein Bierbrauverfahren gemäß einer Ausführungsform der vorliegenden Erfindung ausgeführt werden kann.
Figur 2 veranschaulicht eine Anlage zum Bierbrauen gemäß einer weiteren Ausführungsform der vorliegenden Erfindung mithilfe derer ein Bierbrauverfahren gemäß einer weiteren Ausführungsform der vorliegenden Erfindung ausgeführt werden kann.
Figur 3 zeigt Details möglicher Anschlüsse für einen erfindungsgemäß vorgesehenen Erweiterungsspeichertank.

Es werden Techniken zum Bierbrauen unter Rückgewinnung thermischer Energie bereitgestellt, in denen ein Energiespeichertank zur Speicherung rekuperativ gewonnener thermischer Energie Verwendung findet, wobei das Volumen des Energiespeichertanks zur Speicherung thermischer Energie durch eine mit dem Energiespeichertank verbundenen Erweiterungsspeichertank erweitert wird. Der Erweiterungsspeichertank kann zur Speicherung rekuperativ gewonnener thermischer Energie aber auch zu Speicherung nicht rekuperativ gewonnener thermischer Energie Verwendung finden.

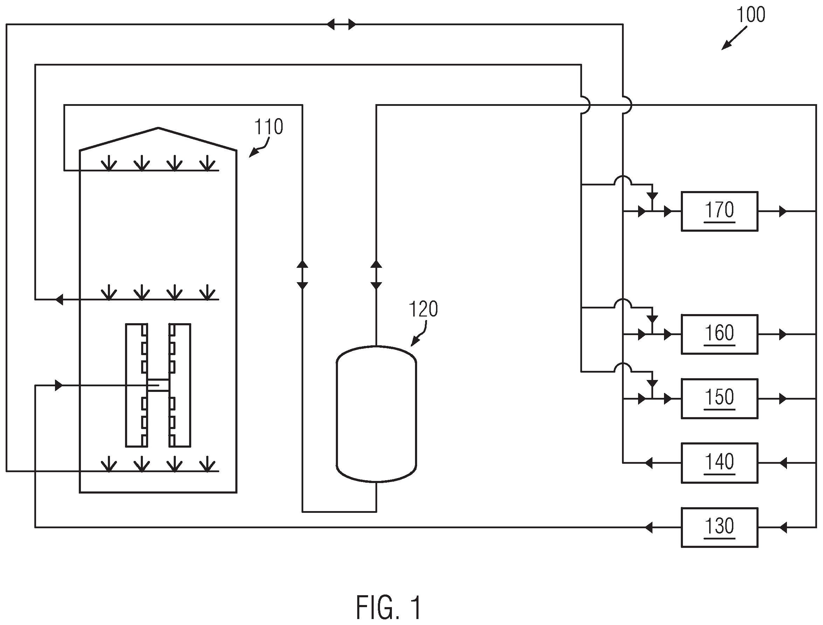

Figur 1 zeigt beispielhaft Teile einer Anlage 100 zum Bierbrauen (insbesondere für ein Sudhaus) gemäß einer Ausführungsform beziehungsweise mithilfe derer ein erfindungsgemäßes Verfahren zum Bierbrauen ausgeführt werden kann. Die Anlage 100 umfasst einen Energiespeichertank 110 und einen damit in Reihe verbundenen Erweiterungsspeichertank 120. In der in Figur 1 gezeigten Ausführungsform ist der Erweiterungsspeichertank 120 über lediglich eine Verbindungsleitung mit einem oberen Bereich des Energiespeichertanks 110 (beispielsweise im obersten Viertel, Fünftel oder Sechstel des Energiespeichertanks 110) verbunden. Die Verbindungsleitung kann an dem unteren Boden, beispielsweise einem unteren Klöpperboden des Erweiterungsspeichertanks 120 angeschlossen sein. Der Energiespeichertank 110 dient der Zwischenspeicherung rekuperativ gewonnener thermischer Energie bis zu ihrer Verwendung in einem Wärmeverbraucher der Anlage 100 mittels eines Wärmeträgers (beispielsweise Wasser, etwa Brauwasser, unbehandeltes oder aufbereitetes (beispielsweise enthärtetes) Wasser, oder Thermoöl). Der Energiespeichertank 110 kann atmosphärisch offen oder geschlossen sein. Wenn er atmosphärisch offen ausgebildet ist, kann der Energiespeichertank 110 mit einem Überlauf oder einem auf oder über dem Tank angebrachten kleinen Überlaufgefäß (nicht mit dem Erweiterungsspeichertank 120 zu verwechseln) ausgestattet sein. Die Volumenausdehnung bei Erwärmung des gespeicherten Wärmeträgers wird bei solchen atmosphärisch offenen Tanks entweder über ein im Tank vorzusehendes zusätzliches Ausdehnungsvolumen oder über das Überlaufgefäß auf beziehungsweise über dem Energiespeichertank 110 abgepuffert, sodass ein permanentes Überlaufen und Nachfüllen verhindert werden kann. Zusätzlich kann in der Überlaufleitung ein sogenannter Siphon (nicht dargestellt) zur Aufrechterhaltung eines geringen Überdrucks im Energiespeichersystem und zur Vermeidung von Ausdampfung eines atmosphärisch offenen Energiespeichers vorhanden sein. Auch andere Vorrichtungen zur Aufrechterhaltung eines geringen Überdrucks und/oder zur Vermeidung von Ausdampfung eines atmosphärisch offenen Energiespeichers sind möglich. Insbesondere kann der Energiespeichertank 110 ein Schichtenspeichertank sein, in dem auf unterschiedlichen Niveaus Wärmeträger unterschiedlicher Temperaturen gespeichert werden kann. Der Energiespeichertank 110 kann beispielsweise in verschiedenen Teilbereichen Wärmeträger/Wärme mit Temperaturniveaus zwischen 75 °C und 98 °C oder 75 °C und 110 °C speichern. Die Einlagerung und Auslagerung des Wärmeträgers kann temperaturabhängig mittels einer oder mehrerer Schichtladelanzen erfolgen.

Der Erweiterungsspeichertank 120 kann ebenfalls der Speicherung rekuperativ gewonnener Energie oder der Speicherung von Hochtemperatur-Energie mittels eines Wärmeträgers, beispielsweise in Form von Heißwasser von mindestens 110 °C bis hin zu etwa 150 °C dienen, die aus Primärenergiequellen (Öl, Gas), Biogas, Fernwärme, Solarthermie, Wärmepumpe, Blockheizkraftwerk o.ä. stammen kann. Auch der Erweiterungsspeichertank 120 kann Wärmeträger unterschiedlicher Temperaturen speichern.

Wenn in dem Erweiterungsspeichertank 120 ein Wärmeträger mit den genannten hohen Temperaturen (insbesondere höher als die maximale Temperatur des in dem Energiespeichertank 110 gespeicherten Wärmeträgers) gespeichert werden soll, kann es vorteilhaft sein, eine Vorrichtung für eine definierte Zu-/Ableitung des Speichermediums/Wärmeträgers vorzusehen. So kann beispielsweise über Regelklappen oder ein Drei-Wegeventil und einen Temperaturfühler entschieden werden, den Wärmeträger über entsprechende Leitungen in den oberen Teil des Erweiterungsspeichers 120 einzulagern. Hat der ankommende Wärmeträger die gleiche oder eine ähnliche Temperatur wie der in dem oberen Bereich des Energiespeichertanks 110 gespeicherte Wärmeträger, wird das Speichermedium nach dem Erweiterungsspeichertank 120 dem System zurückgeführt, beispielsweise in die Verbindungsleitung zwischen dem Energiespeichertank 110 und dem Erweiterungsspeichertank 120, oder direkt in den Energiespeichertank 110 auf Höhe der entsprechenden Temperatur. Der Druckausgleich beziehungsweise Volumenausgleich kann über den Energiespeichertank 110 beziehungsweise eine entsprechende Ausgleichsvorrichtung erfolgen.

Der Erweiterungsspeichertank 120 ist atmosphärisch geschlossen ausgebildet, wobei er keine Vorrichtung beziehungsweise kein zusätzliches Volumen für einen temperaturbedingten Volumenausgleich und auch keine irgend geartete Druckausgleichseinrichtung aufweisen muss. Der Erweiterungsspeicher 120 kann jedoch mit einem atmosphärisch offenen Energiespeicher 110 kombiniert sein. Ein temperaturbedingter Volumenausgleich kann über den Kopfraum oder eine Volumenausgleichseinrichtung des Energiespeichertanks 110 erfolgen. Wenn der Energiespeichertank 110 atmosphärisch offen ist, sollte der höchste mit dem gespeicherten Wärmeträger befüllte Punkt des Systems nicht höher als der im Energiespeichertank 110 vorliegende Füllpegel liegen, um ein Leerlaufen des Erweiterungsspeichertanks 120 zu verhindern. Insbesondere kann im Betrieb der Erweiterungsspeichertank 120 immer vollständig mit einem Wärmeträger gefüllt sein. Der Erweiterungsspeichertank 120 kann mit Temperatursonden und einer Entlüftungsarmatur ausgestattet sein, eine Entlüftung des Erweiterungsspeichertanks 120 kann jedoch auch über eine für den Energiespeichertank 110 vorgesehene Entlüftung oder über eine Entlüftung an einer Rohrleitung erfolgen.

Das Fassungsvermögen des Erweiterungsspeichertanks 120 liegt unterhalb desjenigen des Energiespeichertanks 110, etwa bei 10 % bis 80 %, beispielsweise zwischen 20 % bis 60 % desselben.

Im Sudhaus wird aus stärkehaltigen Braurohstoffen, beispielsweise Gerste, Malz, Reis oder Mais und Zugabe von Hopfen, eine Bierwürze hergestellt, die unter Zugabe von Hefe vergoren wird. Die Braurohstoffe werden meist zerkleinert (zum Beispiel in einer Trockenschrotmühle, Naßschrotmühle oder Hammermühle) und mit Wasser vermischt um eine Maische herzustellen. Die Anlage 100 umfasst ein Maischgefäß 130 zur Durchführung des Maischprozesses. Bei dem Maischgefäß 130 handelt es sich um einen Behälter, in welchem der Maischprozess durchgeführt wird. Es kann sich hierbei beispielsweise um einen Maischbottich, eine Maischpfanne oder Maischbottichpfanne handeln. Der erste Teilschritt des Maischens, das sogenannten "Einmaischen", in welchem Wasser und (zerkleinerte / geschrotete) Rohstoffe vermischt werden, kann in einem Maischgefäß stattfinden oder in einem vorgelagertem Einmaischtank oder Einmaischschnecke. Es können auch mehrere Maischgefäße 130 in der Anlage 100 vorhanden sein.

Ein Wärmeträger wird von dem Erweiterungsspeichertank 120 über eine im oberen Boden (beispielsweise einem oberen Klöpperboden) des Erweiterungsspeichertanks 120 angeschlossen Leitung an das Maischgefäß 130 geliefert, um den Maischprozess mithilfe der in dem Wärmeträger zwischengespeicherten Energie, beispielsweise rekuperativ gewonnener thermischer Energie, auszuführen. Der Wärmeträger dient als Heizmedium und erwärmt die Maische auf die vorgesehenen Temperaturen. Der abgekühlte Wärmeträger wird nachfolgend wieder in den Energiespeichertank 110 zurückgeführt und zwischengespeichert.

Der Maischprozess hat unter anderem den Stärkeabbau zum Ziel. Nach Abschluss des Maischprozesses hat die Maische beispielsweise eine Temperatur zwischen 74 °C und 78°C. Es folgt eine Fest-Flüssig-Trennung der Maische in einem Läutergerät wie beispielsweise einem Maischefilter, Läuterbottich, Drehscheibenfilter oder Strainmaster, sodass die löslichen (flüssigen) Bestandteile von den unlöslichen Bestandteilen der Maische abgetrennt werden. Während die unlöslichen Bestandteile der Maische, also die Treber, abgetrennt und anderen Verwendungszwecken beispielsweise als Tierfutter oder zur Energiegewinnung zugeführt werden, wird die abgetrennte flüssige Phase, die Läuterwürze, beispielsweise mit einer Temperatur zwischen 72 °C und 78 °C einem optionalen Puffergefäß, dem sogenannten Vorlaufgefäß zur Zwischenspeicherung zugeführt. Alternativ wird die abgeläuterte Würze (d.h. die von den Trebern abgetrennte Würze, also die Läuterwürze) direkt nach der Fest-Flüssig-Trennung zu einer Würzekochung/-heißhaltung geführt, also ohne Zwischenspeicherung in einem Vorlaufgefäß.

In einem Läuterwürzeerhitzer 140 wird die Läuterwürze, insbesondere rekuperativ, erhitzt, bevor sie zur Würzekochung/-heißhaltung unter Zugabe von Hopfen in eine Würzepfanne geleitet wird (der Hopfen kann auch erst während der Würzekochung/-heißhaltung der Würze zugegeben werden). Denkbar ist auch, dass der Läuterwürzeerhitzer 140 direkt der Würzepfanne zugeordnet ist und dabei in die Würzepfanne abgeläutert wird. Dann erfolgt eine Erhitzung der Würze durch Zirkulation der Würze über einen unteren Abzug aus der Würzepfanne und einer Überschichtung der kühleren Würze in der Würzepfanne. Auch eine Erwärmung während der Abläuterung ist denkbar. Ein Wärmeträger wird von dem Erweiterungsspeichertank 120 an den Läuterwürzeerhitzer 140 geliefert, um die Erhitzung der Läuterwürze mithilfe der in dem Wärmeträger zwischengespeicherten, beispielsweise rekuperativ gewonnenen, thermischen Energie auszuführen. Der abgekühlte Wärmeträger wird nachfolgend wieder in den Energiespeichertank 110 zurückgeführt und zwischengespeichert.

Die Würzekochung/-heißhaltung erfolgt mithilfe eines Würzekochers (Würzeheißhalters) beispielsweise über 60 Minuten oder länger (für einen Sud). Als Würzekocher/Würzeheißhalter können beispielsweise Außenkocher und/oder Innenkocher eingesetzt werden, jedoch werden auch Boden- und/oder Zargenheizflächen, welche in Behältern angebracht sind, eingesetzt; jedoch sind auch andere Wärmeübertragerflächen einsetzbar.

Der Würzekocher/Würzeheißhalter kann beispielsweise ein mit etwa 120 °C oder weniger heißem Wärmeträger (beispielsweise Wasser) als Heizmedium betriebener Außenkocher sein. Die Würzekochung/-heißhaltung erfolgt insbesondere zur Isomerisation des Hopfens und Sterilisation der Würze beispielsweise bei Temperatur zwischen 95 °C und 110 °C. Die Anlage 100 umfasst weiterhin einen Würzekühler 150 mit zumindest einem Wärmetauscher zur Würzekühlung. Dieser Wärmetauscher ist beispielsweise als Rohrbündelwärmetauscher oder bevorzugt als Plattenwärmetauscher ausgebildet. Beispielsweise handelt es sich bei dem Würzekühler 150 um einen ein- oder mehrstufigen Plattenwärmetauscher. Die Würzekühlung kann beispielsweise über einen Zeitraum von 30 bis 75 Minuten erfolgen. Ein bei der Würzekühlung in den Wärmetauschern des Würzekühlers 150 erwärmter Wärmeträger wird zur Speicherung der rekuperativ gewonnenen thermischen Energie in dem Energiespeichertank 110 oder dem Erweiterungsspeichertank 120 zwischengespeichert. Zum rekuperativen Heizen der Maische in dem Maischgefäß 130 benötigte thermische Energie kann beispielsweise von dem Würzekühler 150 über einen Wärmetauscher desselben gewonnen werden.

Die Anlage 100 umfasst weiterhin einen Pfannendunstkondensator 160 zur Niederschlagung der beim Würzekochen/bei der Würzeheißhaltung aufsteigenden Brüden und somit zur Rekuperation von Wärmeenergie aus den Brüdendämpfen der Würzekochung/-heißhaltung. Der Pfannendunstkondensator 160 kann beispielsweise als Plattenübertrager oder bevorzugt Rohrbündelübertrager ausgeführt sein. Ein bei der Niederschlagung der beim Würzekochen/bei der Würzeheißhaltung aufsteigenden Brüden erwärmter Wärmeträger wird zur Speicherung der rekuperativ gewonnenen thermischen Energie in dem Energiespeichertank 110 oder dem Erweiterungsspeichertank 120 zwischengespeichert. Der Pfannendunstkondensator 160 steht somit im Kreislauf mit dem Energiespeichertank 110 / Erweiterungsspeichertank 120. Beispielsweise wird Wasser mit einer Temperatur von 78 °C von dem Energiespeichertank 110 an den Pfannendunstkondensator 160 zum Niederschlagen der Brüden geliefert, wodurch das Wasser sich in dem Pfannendunstkondensator 160 beispielsweise auf 92 °C bis 100 °C erwärmt, sodass es nachfolgend unter Zwischenspeicherung etwa in dem Erweiterungsspeichertank 120 zum Heizen verschiedener Prozesse als Wärmeträger, wie beispielsweise für die Erwärmung der Maische in dem Maischgefäß 130 oder der Läuterwürze in dem Läuterwürzeerhitzer 140, verwendet werden kann.

Weiterhin umfasst die in Figur 1 gezeigte Ausführungsform der Anlage 100 zum Bierbrauen einen beispielsweise mit Primärenergie betriebenen Nachheizer (eine Heizeinrichtung beispielsweise in Form eines Wärmetauschers oder elektrischen Erhitzers) 170 zur Beladung des aus dem Energiespeichertank 100 und dem Erweiterungsspeichertank 120 bestehenden Energiespeichersystems mit thermischer Energie, beispielsweise Hochtemperatur-Energie. Insbesondere kann ein Wärmeträger mit Hochtemperatur-Energie (einer Temperatur von wenigstens 110 °C) in dem Erweiterungsspeichertank 120 bis zur Nutzung in einem Wärmeverbraucher zwischengespeichert werden.

Der Energiespeichertank 110 zusammen mit dem Erweiterungsspeichertank 120 können sämtliche oder zumindest annähernd sämtliche (beispielsweise zu mindestens 80 % oder 90 % oder zu 100 %) für das gesamte Brauverfahren im Sudhaus benötigten Wärmeverbraucher mit Wärmeträger (beispielsweise Heißwasser) mit einer Temperatur von mindesten 75 °C, insbesondere mindestens 78 °C oder 96 °C bis 98 °C oder höher, beliefern. Es kann vorteilhaft sein, dass der Energiespeichertank 110 zusammen mit dem Erweiterungsspeichertank 120 auch andere (möglichst viele) Wärmeverbraucher der Brauerei außerhalb des Sudhauses mit einem Wärmeträger (beispielsweise Heißwasser) versorgt.

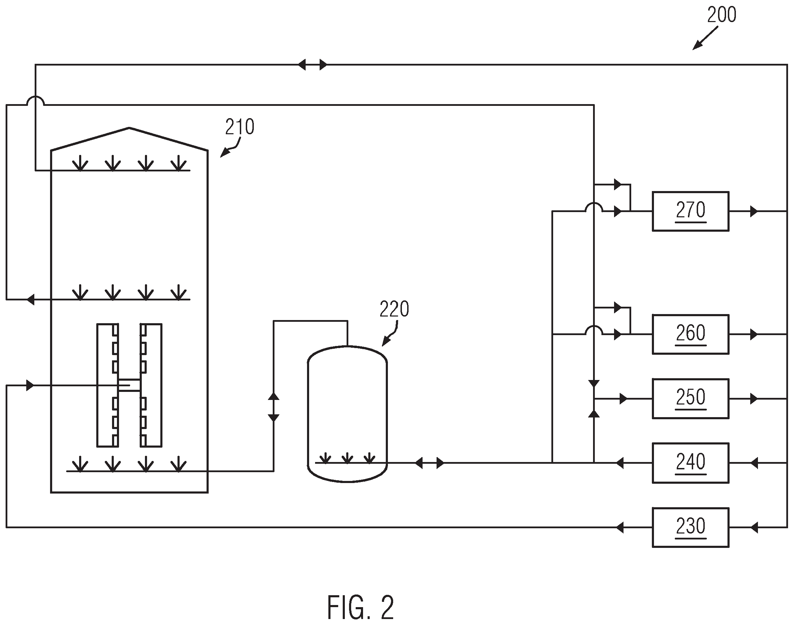

In Figur 2 ist eine alternative Anlage 200 zum Bierbrauen gezeigt. Die Anlage 200 umfasst einen Energiespeichertank 210 und einen damit verbundenen Erweiterungsspeichertank 220. Weiterhin umfasst die Anlage 200 wie die Anlage 100 und oben beschrieben Wärmeverbraucher und Wärmeerzeuger in Form des Maischgefäßes 230, des Läuterwürzeerhitzers 240, des Würzekühlers 250 und des Pfannendunstkondensators 260. Weiterhin umfasst die Anlage 200 ebenfalls einen Nachheizer (eine Heizeinrichtung beispielsweise in Form eines Wärmetauschers oder elektrischen Erhitzers) 270.

Der Energiespeichertank 210 dient der Zwischenspeicherung rekuperativ gewonnener thermischer Energie bis zu ihrer Verwendung in einem Wärmeverbraucher der Anlage 200 mittels eines Wärmeträgers (beispielsweise Wasser, etwa Brauwasser, unbehandeltes oder aufbereitetes (beispielsweise enthärtetes) Wasser, oder Thermoöl). Der Energiespeichertank 210 kann atmosphärisch offen oder geschlossen sein. Wenn er atmosphärisch offen ausgebildet ist, kann der Energiespeichertank 210 mit einem Überlauf oder einem auf oder über dem Tank angebrachten kleinen Überlaufgefäß (nicht mit dem Erweiterungsspeichertank 220 zu verwechseln) ausgestattet sein. Insbesondere kann der Energiespeichertank 210 ein Schichtenspeichertank sein, in dem auf unterschiedlichen Niveaus Wärmeträger unterschiedlicher Temperaturen gespeichert werden kann. Der Energiespeichertank 210 kann beispielsweise in verschiedenen Teilbereichen Wärmeträger/Wärme mit Temperaturniveaus zwischen 75 °C und 98 °C oder 75 °C und 110 °C speichern. Auch kann der Energiespeichertank dazu ausgebildet sein, einen Wärmeträger mit höherer Temperatur, beispielsweise zwischen 115 °C und 120 °C oder zwischen 120 °C und 145 °C, zu speichern. Die Einlagerung und Auslagerung des Wärmeträgers kann temperaturabhängig mittels einer oder mehrerer Schichtladelanzen erfolgen.

Der Erweiterungsspeichertank 220 kann ebenfalls der Speicherung rekuperativ gewonnener Energie oder der Speicherung von Hochtemperatur-Energie mittels eines Wärmeträgers in Form von beispielsweise Heißwasser von mindestens 110 °C bis hin zu etwa 150 °C dienen, die aus Primärenergiequellen (Öl, Gas), Biogas, Fernwärme, Solarthermie, Wärmepumpe, Blockheizkraftwerk, oder der Umwandlung von elektrischer in thermische Energie, o.ä. stammen kann. Auch der Erweiterungsspeichertank 220 kann Wärmeträger unterschiedlicher Temperaturen speichern.

Im Gegensatz zu der in Figur 1 gezeigten Anlage 100 ist der Erweiterungsspeichertank 220 in Figur 2 über lediglich eine Verbindungsleitung mit einem unteren Bereich des Energiespeichertanks 210 (beispielsweise im untersten Viertel, Fünftel oder Sechstel des Energiespeichertanks 210) verbunden und stellt somit eine Volumenerweiterung für den kälteren Bereich des Energiespeichertanks 210 bereit. Die Verbindungsleitung kann an dem oberen Boden, beispielsweise einem oberen Klöpperboden, des Erweiterungsspeichertanks 220 angeschlossen sein. Der Erweiterungsspeichertank 220 kann mit den Wärmeverbrauchern und Wärmeerzeugern derart verbunden sein, dass Ein- und/oder Auslagerungsmittel (horizontale oder vertikale (Schicht-)Ladelanze) über die Zargenwandung angeschlossen und mit einer Leitung verbunden sind. Beispielsweise mittels Regelklappen, Temperatursonden, zusätzlichen Leitungen und Steuerungen kann eine temperaturabhängige Schichtung in den beiden Tanks, dem Energiespeichertank 210 und dem Erweiterungsspeichertank 220, erreicht werden, in den Figuren nicht gezeigt.

Ein Wärmeträger kann von dem Energiespeichertank 210 und dem Erweiterungsspeichertank 220 dem Würzekühler 250 und dem Pfannendunstkondensator 260 zugeleitet werden. Rekuperativ gewonnene thermische Energie kann durch einen in dem Würzekühler 250 und dem Pfannendunstkondensator 260 erwärmten Wärmeträger in dem Energiespeichertank 210 zwischengespeichert werden. Ein in den Wärmeverbrauchern in Form des Maischgefäßes 230 und des Läuterwürzeerhitzers 240 abgekühlter Wärmeträger kann in dem Energiespeichertank 210 und/oder dem Erweiterungsspeichertank 220 zwischengespeichert werden.

Im Betrieb kann in der in Figur 2 gezeigten Anlage 200 zum Bierbrauen ein Wärmeträger direkt von dem Erweiterungsspeichertank 220 und/oder von dem Energiespeichertank 210 an den Nachheizer 270 geliefert werden.

Ein Nachheizen mittels eines Nachheizers 170, 270 kann beispielsweise über einen Wärmeübertrager mittels einer externen Wärmequelle erfolgen, beispielsweise mit einem Schnelldampferzeuger. Denkbar als Nachheizer 170, 270 ist auch eine elektrische Heizvorrichtung am/oder im Energiespeicher und/oder Erweiterungsspeicher.

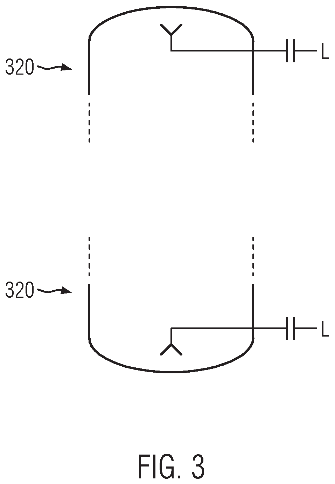

In Figur 3 sind mögliche Anschlüsse von Leitungen L zur Einlagerung beziehungsweise Auslagerung eines Wärmeträgers für einen Erweiterungsspeichertank 320, beispielsweise den Erweiterungsspeichertank 120 der in Figur 1 gezeigten Anlage 100 oder den Erweiterungsspeichertank 220 der in Figur 2 gezeigten Anlage 200, gezeigt. In dem gezeigten Beispiel können der obere und untere Boden des Erweiterungsspeichers 320 neben einer eventuellen Entlüftungsarmatur vollständig isoliert werden, was sich positiv auf Abstrahlverluste auswirken kann. Die gezeigten Ausführungsformen für Be- und Entladeeinrichtungen sind sowohl für den oberen als auch den untern Anschluss am Erweiterungsspeicher 320 geeignet.

Der Zulauf in den Erweiterungsspeichertank 320 beziehungsweise der Ablauf können über in dem Erweiterungsspeichertank 320 angeordnete Rohrstücke erfolgen, in die durch Fräsen, Schneiden, Stanzen oder Bohren oder dergleichen Öffnungen für das Ein- und/oder Ausströmen von Wärmeträger mit der erforderlich niedrigen Fließgeschwindigkeit vorgesehen sind. Ein- beziehungsweise Auslagerungseinrichtungen für den Wärmeträger können Prallteller und Ein-/Auslagerungsrohre mit Aufweitungen für die Ein- und Auslagerung von Speichermedium umfassen.

Sämtliche Verbindungen einzelner Komponenten der in den Figuren 1 und 2 gezeigten Anlagen 100 beziehungsweise 200 miteinander sind lediglich beispielhaft und können, wie es als geeignet angesehen wird, teilweise durch andere Verbindungen ersetzt oder teilweise um weiteren Verbindungen ergänzt werden. Beispielsweise können der Energiespeichertank 110 und der Erweiterungsspeichertank 120 der Anlage 100 beziehungsweise der Energiespeichertank 210 und der Erweiterungsspeichertank 220 der Anlage 200 ein oder mehrere weitere Verbindungen miteinander aufweisen. Beispielsweise kann eine zusätzliche Verbindung zwischen dem Energiespeichertank 110 und dem Erweiterungsspeichertank 120 der Anlage 100 beziehungsweise dem Energiespeichertank 210 und dem Erweiterungsspeichertank 220 der Anlage 200 auf einem wohldefinierten Höhenniveau und somit Temperaturniveau des jeweils gespeicherten Wärmeträgers vorgesehen sein, und von einem Anschluss an einer solchen zusätzliche Verbindung kann ein Wärmeträger wohldefinierten Temperaturniveaus einem Wärmeverbraucher oder einer Vorrichtung zum rekuperativen Gewinnen thermischer Energie zugeleitet werden.

Die in Figur 1 veranschaulichte Anlage 100 sowie die in Figur 2 gezeigte Anlage 200 beziehungsweise Variationen davon können erfindungsgemäß zum Bierbrauen Verwendung finden und zum Ausführen einer Ausführungsform eines Verfahrens zur Herstellung von Bier genutzt werden.

Prinzipiell kann in dem Verfahren jedes Fluid als Wärmeträger verwendet werden, welches geeignet ist, Wärme aufzunehmen und abzugeben; somit kann beispielhaft Thermoöl oder Wasser verwendet werden. Beispielsweise weist das Wasser Trinkwasserqualität auf, sodass es zum einen als Wärmeträger eingesetzt werden kann, also für Heizzwecke verwendet werden kann (zum Beispiel zum Aufheizen der Maische oder der Läuterwürze) und zum anderen als Produktwasser eingesetzt werden kann, also für Warmwasserverbraucher verwendet werden kann (zum Beispiel als Maischwasser oder zum Ausschieben von Maische aus einer Leitung). Bei dem Waser kann es sich um Brauwasser, unbehandeltes oder aufbereitetes (beispielsweise enthärtetes) Wasser handeln.

Beispielsweise lässt sich unter Verwendung der in Figur 1 gezeigten Anlage 100 ein Verfahren zum Bierbrauen mit den Schritten des Leitens von einem Wärmeträger aus dem Energiespeichertank 110 zu einer Vorrichtung 150, 160, die zum rekuperativen Gewinnen thermischer Energie ausgebildet ist, und des Leitens von einem Wärmeträger aus dem Erweiterungsspeichertank 120 zu einem Wärmeverbraucher 130, 140 ausführen. Beispielsweise lässt sich unter Verwendung der in Figur 2 gezeigten Anlage 200 ein Verfahren zum Bierbrauen mit den Schritten des Leitens von einem Wärmeträger aus dem Erweiterungsspeichertank 220 zu einer Vorrichtung 250, 260, die zum rekuperativen Gewinnen thermischer Energie ausgebildet ist und des Leitens von einem Wärmeträger aus dem Energiespeichertank 210 zu einem Wärmeverbraucher 230, 240 ausführen.

Auch wenn hier nicht gezeigt, kann es sein, dass beispielsweise der Erweiterungsspeicher 120 an eine Würzekocheinrichtung/Würzeheißhaltungseinrichtung angeschlossen ist. Es kann weiterhin sein, dass lediglich ein oder mehrere Wärmeverbraucher (beispielsweise 130, 140, 230, 240) und/oder Wärmequellen (beispielsweise 150, 160, 250, 260, 170, 270) mit dem Energiespeichertank 110 beziehungsweise 210 und/oder dem Erweiterungsspeicher 120 beziehungsweise 220 in Verbindung stehen.

Insbesondere kann in der erfindungsgemäßen Anlage, beispielsweise in der in Figur 1 gezeigten Anlage 100 ein Wärmeverbraucher, beispielsweise eine Würzekocheinrichtung/Würzeheißhaltungseinrichtung, ausschließlich mit thermischer Energie aus dem Erweiterungsspeichertank, beispielsweise dem Erweiterungsspeichertank 120, versorgt werden. Hierfür ist dem Erweiterungsspeichertank eine Heizeinrichtung, beispielsweise der Nachheizer 170, zugeordnet, um den an den Wärmeverbraucher zu liefernden Wärmeträger zu erhitzen. Nach der Abkühlung in diesem Wärmeverbraucher kann der Wärmeträger zur Zwischenspeicherung bis zur Verwendung durch einen anderen Wärmeverbraucher, beispielsweise einem Läuterwürzeerhitzer (beispielsweise dem Läuterwürzeerhitzer 140), wieder vorteilhafterweise dem Erweiterungsspeichertank 120 zugeleitet werden. Wird der Erweiterungsspeicher wie in der Figur 2, also im unteren Bereich des Energiespeichers 210 angebunden, und handelt es sich bei dem Energiespeicher 210 um einen atmosphärisch geschlossenen Energiespeicher (beispielsweise einen Druckspeicher), kann beispielsweise eine Würzekocheinrichtung/Würzeheißhaltungseinrichtung ausschließlich mit thermischer Energie aus dem Energiespeicher 210 versorgt werden. Hierfür ist dann dem Energiespeicher 210 eine Heizeinrichtung, beispielsweise ein Nachheizer 270, zugeordnet, um den an den Wärmeverbraucher zu liefernden Wärmeträger zu erhitzen. Nach der Abkühlung in diesem Wärmeverbraucher kann der Wärmeträger zur Zwischenspeicherung bis zur Verwendung durch einen anderen Wärmeverbraucher, beispielsweise einem Läuterwürzeerhitzer (beispielsweise dem Läuterwürzeerhitzer 240), wieder vorteilhafterweise dem Energiespeicher 210 zugeleitet werden.

Auch wenn in den Figuren nicht gezeigt, werden Armaturen, wie beispielsweise Absperr-, Regelklappen, Ventile und Pumpen sowie Feldgeräte, wie beispielsweise Temperaturmessungen oder Durchflussmessungen oder Wärmemengenzähler sowie eine geeignete Steuerungseinrichtung geeignet vorgesehen.

## Patentansprüche

1. Anlage (100, 200) zum Bierbrauen, die umfasst:
einen Energiespeichertank (110, 210) mit einem ersten Fassungsvermögen zum Speichern rekuperativ gewonnener thermischer Energie mittels eines Wärmeträgers;
einen mit dem Energiespeichertank (110, 210) verbundenen Erweiterungsspeichertank (120, 220), mit einem zweiten Fassungsvermögen, das kleiner als das erste Fassungsvermögen ist;
eine Vorrichtung (150, 160, 250, 260), die zum rekuperativen Gewinnen thermischer Energie ausgebildet ist und mit dem Energiespeichertank (110, 210) und dem Erweiterungsspeichertank (120, 220) verbunden ist; und
einen Wärmeverbraucher (130, 140, 230, 240), der mit dem Energiespeichertank (110, 210) und dem Erweiterungsspeichertank (120, 220) verbunden ist.

2. Die Anlage (100) gemäß Anspruch 1, in der der Erweiterungsspeichertank (120) lediglich mit einem oberen Bereich des Energiespeichertanks (110) über eine Verbindungsleitung verbunden ist.

3. Die Anlage (200) gemäß Anspruch 1, in der der Erweiterungsspeichertank (220) lediglich mit einem unteren Bereich des Energiespeichertanks (210) über eine Verbindungsleitung verbunden ist.

4. Die Anlage (100) gemäß Anspruch 2, in der der Erweiterungsspeichertank (120) direkt mit dem Wärmeverbraucher (130, 140) zum Liefern des Wärmeträgers an den Wärmeverbraucher (130, 140) verbunden ist.

5. Die Anlage (200) gemäß Anspruch 3, in der der Energiespeichertank (210) direkt mit dem Wärmeverbraucher (230, 240) zum Liefern des Wärmeträgers an den Wärmeverbraucher (230, 240) verbunden ist.

6. Die Anlage (100) gemäß Anspruch 2 oder 4, in der der Energiespeichertank (110) direkt mit der Vorrichtung (150, 160), die zum rekuperativen Gewinnen thermischer Energie ausgebildet ist, zum Liefern des Wärmeträgers an die Vorrichtung (150, 160) verbunden ist.

7. Die Anlage (200) gemäß Anspruch 3 oder 5, in der der Erweiterungsspeichertank (220) direkt mit der Vorrichtung (250, 260), die zum rekuperativen Gewinnen thermischer Energie ausgebildet ist, zum Liefern des Wärmeträgers an die Vorrichtung (250, 260) verbunden ist.

8. Die Anlage (100, 200) gemäß einem der vorhergehenden Ansprüche, in der die Vorrichtung (150, 160, 250, 260), die zum rekuperativen Gewinnen thermischer Energie ausgebildet ist, ein Würzekühler oder ein Pfannendunstkondensator ist, und der Wärmeverbraucher (130, 140, 230, 240) ein Maischgefäß oder ein Läuterwürzeerhitzer ist.

9. Die Anlage (100, 200) gemäß einem der vorhergehenden Ansprüche, in der die Vorrichtung (150, 250), die zum rekuperativen Gewinnen thermischer Energie ausgebildet ist, ein Würzekühler ist und der Wärmeverbraucher (130, 230) ein Maischgefäß ist, und weiterhin umfassend:
einen Pfannendunstkondensator als eine weitere Vorrichtung, die zum rekuperativen Gewinnen thermischer Energie ausgebildet ist, der mit dem Energiespeichertank verbunden ist; und
einen Läuterwürzeerhitzer als einen weiteren Wärmeverbraucher, der mit dem Energiespeichertank verbunden ist.

10. Die Anlage (100, 200) gemäß einem der vorhergehenden Ansprüche, die weiterhin eine Heizeinrichtung (170, 270) umfasst, die zum Heizen
eines in den Energiespeichertank (110, 210) zu speichernden Wärmeträgers und/oder
eines von dem Energiespeichertank (110, 210) gelieferten Wärmeträgers und/oder
eines in dem Energiespeichertank gespeicherten Wärmeträgers und/oder
eines in den Erweiterungsspeichertank (120, 220) zu speichernden Wärmeträgers und/oder
eines von dem Erweiterungsspeichertank (120, 220) gelieferten Wärmeträgers und/oder
eines in dem Erweiterungsspeichertank gespeicherten Wärmeträgers ausgebildet ist.

11. Verfahren zum Nachrüsten einer Anlage zum Bierbrauen, die einen Energiespeichertank, eine Vorrichtung, die zum rekuperativen Gewinnen thermischer Energie ausgebildet ist, und einen Wärmeverbraucher umfasst, mit den Schritten:
Bereitstellen eines Erweiterungsspeichertanks mit einem Fassungsvermögen, das kleiner als das Fassungsvermögen des Energiespeichertanks ist;
Verbinden des bereitgestellten Erweiterungsspeichertanks mit lediglich einem oberen Bereich oder lediglich einen unteren Bereich des Energiespeichertanks.

12. Das Verfahren gemäß Anspruch 11, weiterhin mit:
a) wenn der Erweiterungsspeichertank lediglich mit dem oberen Bereich des Energiespeichertanks verbunden ist, Verbinden des Erweiterungsspeichertanks, insbesondere direkt, mit dem Wärmeverbraucher zum Liefern von einem in dem Erweiterungsspeichertank gespeicherten Wärmeträger an den Wärmeverbraucher;
und
b) wenn der Erweiterungsspeichertank lediglich mit dem unteren Bereich des Energiespeichertanks verbunden ist, Verbinden des Erweiterungsspeichertanks insbesondere direkt, mit der Vorrichtung, die zum rekuperativen Gewinnen thermischer Energie ausgebildet ist, zum Liefern von einem in dem Erweiterungsspeichertank gespeicherten Wärmeträger an die Vorrichtung.

13. Verfahren zum Bierbrauen, mit den Schritten
Bereitstellen eines Energiespeichertanks (110, 210) mit einem ersten Fassungsvermögen zum Speichern rekuperativ gewonnener thermischer Energie mittels eines Wärmeträgers;
Bereitstellen eines mit dem Energiespeichertank (110, 210) verbundenen Erweiterungsspeichertank (120, 220), mit einem zweiten Fassungsvermögen, das kleiner als das erste Fassungsvermögen ist;
Leiten von einem Wärmeträger aus dem Energiespeichertank (110, 210) zu einer Vorrichtung (150, 160, 250, 260), die zum rekuperativen Gewinnen thermischer Energie ausgebildet ist; und
Leiten von einem Wärmeträger aus dem Erweiterungsspeichertank (120, 220) zu einem Wärmeverbraucher (130, 140, 230, 240).

14. Verfahren zum Bierbrauen, mit den Schritten
Bereitstellen eines Energiespeichertanks (110, 210) mit einem ersten Fassungsvermögen zum Speichern rekuperativ gewonnener thermischer Energie mittels eines Wärmeträgers;
Bereitstellen eines mit dem Energiespeichertank (110, 210) verbundenen Erweiterungsspeichertank (120, 220), mit einem zweiten Fassungsvermögen, das kleiner als das erste Fassungsvermögen ist, zum Speichern rekuperativ gewonnener thermischer Energie mittels eines Wärmeträgers;
Leiten von einem Wärmeträger aus dem Erweiterungsspeichertank (120, 220) zu einer Vorrichtung (150, 160, 250, 260), die zum rekuperativen Gewinnen thermischer Energie ausgebildet ist; und
Leiten von einem Wärmeträger aus dem Energiespeichertank (110, 210) zu einem Wärmeverbraucher (130, 140, 230, 240).
